# EUROPÄISCHE PATENTSCHRIFT

(11) **EP 2 196 690 B1**
(45) Veröffentlichungstag und Bekanntmachung des Hinweises auf die Patenterteilung: **09.03.2016**
(21) Anmeldenummer: 09015047.5
(22) Anmeldetag: 04.12.2009
(51) Int. Cl.: F02B 41/10, F16D 25/062, F16D 48/06, F16D 15/00

(54) **Drehmomentübertragungsvorrichtung**
Torque transmission device
Dispositif de transmission de couple

(30) Priorität: 11.12.2008 DE 202008016385 U
(43) Veröffentlichungstag der Anmeldung: 16.06.2010
(73) Patentinhaber: AB SKF, 415 50 Göteborg (SE)
(72) Erfinder: Schmitt, Marco, 36124 Eichenzell/Rönshausen (DE)
(74) Vertreter: Kohl, Thomas

(56) Entgegenhaltungen:
- EP-A2- 1 972 820
- WO-A1-2005/083288
- DE-A1- 4 106 912
- DE-A1- 10 349 164
- DE-C1- 4 429 855
- FR-A1- 2 413 580
- GB-A- 950 728
- US-A1- 2006 032 225

## Beschreibung

Die Erfindung geht aus von Drehmomentübertragungsvorrichtung nach dem Oberbegriff des Anspruchs 1.

Es sind Kupplungen zum Übertragen eines Antriebsmoments von einer ersten Welle auf eine zweite Welle bekannt, wobei die der ersten Welle gegenüber der zweiten Welle mittels eines Wälzlagers gelagert ist. Die Drehmomentübertragungsvorrichtung kann beispielsweise eine feste oder lösbare Kupplung sein. Wenn aus konstruktiven gründen eine starre Kopplung der beiden Wellen vermeiden werden soll, kann beispielsweise ein hydrodynamischer Wandler oder eine Reibkupplung eingesetzt werden. Insbesondere bei Reibkupplungen können ein Reibmoment und damit eine Drehmomentübertragung von der ersten Welle auf die zweite Welle über ein Stellmittel zum Einstellen der Drehmomentübertragung einstellbar sein.

Ferner ist es bekannt, zur Steigerung der Effektivität und zur Reduktion der Verluste eines Verbrennungsmotors wenigstens einen Teil der thermischen Verluste im Abgas in Bewegungsenergie umzuwandeln, die beispielsweise in einem Abgasturbolader zur Kompression von Ladungsluft genutzt werden kann.

Ferner ist es bekannt, zusätzlich oder alternativ zu einer Turboladerturbine eine Abgasturbine zum Erzeugen von Nutzenergie im Abgastrakt eines Verbrennungsmotors zu platzieren und das Drehmoment der Abgasturbine auf eine zweite Welle zu übertragen, die entweder die Kurbelwelle des Verbrennungsmotors oder eine Welle eines Verbrauchers, beispielsweise der Lichtmaschine oder des Klimakompressors, sein kann. Wenn die Abgasturbine zusätzlich zur Turboladerturbine vorgesehen ist, wird der Verbrennungsmotor auch als Turbo-Compound-Motor bezeichnet.

Eine Drehmomentübertragungsvorrichtung zum Übertragen eines Antriebsmoments von einer ersten Welle auf eine zweite Welle, umfassend wenigstens ein Wälzlager zum koaxialen Lagern der ersten Welle gegenüber der zweiten Welle und ein Stellmittel zum Einstellen einer Drehmomentübertragung von der ersten Welle auf die zweite Welle, ist z.B aus GB 950 728 bekannt.

Problematisch ist, dass die Drehbewegung der zweiten Welle nicht mit der Drehbewegung der Abgasturbine synchron ist. Bei der Übertragung des Antriebsmoments der Abgasturbine auf die Kurbelwelle sind sinusoidale Schwankungen der Drehzahl der Kurbelwelle mit einer Frequenz, die der Frequenz Zündtakts entspricht, vorhanden, während die Drehzahl der Abgasturbine keine oder allenfalls sehr viel geringere Schwankungen mit dieser Frequenz zeigt. Da die beiden Wellen unterschiedliche Drehschwingungen, d.h. periodische Schwankungen in der Rotationsgeschwindigkeit, aufweisen, ist eine starre Kopplung der ersten, mit der Abgasturbine verbundenen Welle mit der Kurbelwelle in diesem Fall nicht möglich.

Die Aufgabe der Erfindung besteht insbesondere darin, eine robuste Drehmomentübertragungsvorrichtung der oben beschriebenen Art zu schaffen, die die Kopplung zweier Wellen mit unterschiedlichen Drehschwingungen bei geringen Betriebskosten erlaubt. Eine weitere Aufgabe der Erfindung besteht darin, eine solche Drehmomentübertragungsvorrichtung zu schaffen, die über ein breites Spektrum von Betriebszuständen effektiv arbeitet.

Die Aufgabe wird erfindungsgemäß durch die Merkmale des unabhängigen Patentanspruchs 1 gelöst, während vorteilhafte Ausgestaltungen und Weiterbildungen der Erfindung den Unteransprüchen entnommen werden können.

Es wird vorgeschlagen, dass das Stellmittel als ein Mittel zum Variieren einer axialen Last des Wälzlagers ausgebildet ist. Durch die Verwendung eines Wälzlagers zur Drehmomentübertragung kann im Vergleich zu der nahe liegenden Lösung, die in der Verwendung einer hydraulischen bzw. hydrodynamischen Drehmomentübertragungsvorrichtung besteht, ein sehr geringer Ölverbrauch erzielt werden. Da hydraulische bzw. hydrodynamische Drehmomentwandler sehr empfindlich gegenüber Verschmutzungen im Öl sind, kann zudem die Robustheit verbessert werden und die Lebensdauer kann verlängert werden. Da Wälzlageranordnungen im Allgemeinen gerade zur Vermeidung einer Drehmomentübertragung genutzt werden, ist die Verwendbarkeit des Wälzlagers als Kupplung bzw. als mechanischer Drehmomentwandler vorteilhaft.

Durch eine Steuereinheit zum Betätigen des Stellmittels, kann eine automatische Steuerung der Drehmomentübertragung über die Drehmomentübertragungsvorrichtung erreicht werden.

Wenn die Steuereinheit dazu ausgelegt ist, die Signale von wenigstens einem Drehzahlsensor zum Messen einer Drehzahl einer der Wellen auszuwerten und das Stellmittel abhängig von der Drehzahl zu betätigen, ist eine Rückkopplung möglich, wodurch ein geschlossener Regelkreis implementiert werden kann.

Die Drehmomentübertragung kann beispielsweise durch die Überwachung einer Drehzahldifferenz verifiziert werden, wenn in einer weiteren vorteilhaften Ausgestaltung der Erfindung die Steuereinheit dazu ausgelegt ist, die Signale von wenigstens zwei Drehzahlsensoren zum Messen einer Drehzahl der ersten Welle und der Drehzahl der zweiten Welle auszuwerten. Dazu kann die Steuereinheit beispielsweise eine Komparatorschaltung oder eine Schaltung zum Bilden der Drehzahldifferenz zwischen den beiden Wellen umfassen.

Während bekannte, hydraulische Drehmomentübertragungsvorrichtungen für einen Betriebspunkt optimiert sind, kann durch die erfindungsgemäße Drehmomentübertragungsvorrichtung ein effektiver, verlustarmer Einsatz in einem breiten Spektrum von Betriebszuständen erreicht werden. Dadurch wird der Einsatz einer gattungsgemäßen Drehmomentübertragungsvorrichtung insbesondere auch in solchen Verbrennungsmotoren interessant, die dazu ausgelegt sind, in einem breiten Drehzahl- bzw. Lastbereich betrieben zu werden.

Durch die erfindungsgemäße Drehmomentübertragungsvorrichtung sind damit Einsparungspotenziale sowohl in der Herstellung als auch in den Betriebskosten realisierbar und eine effektive Nutzung der über die Drehmomentübertragungsvorrichtung verlustarm übertragenen Energie kann in einem breiten Spektrum von Betriebsbedingungen ermöglicht werden.

In einer Weiterbildung der Erfindung wird vorgeschlagen, dass das Stellmittel wenigstens einen auf einen Ring des Wälzlagers wirkenden Druckkolben umfasst. Dadurch kann die Axialkraft konstruktiv einfach und präzise eingestellt werden. Je nach der Bauart der Drehmomentübertragungsvorrichtung kann die Druckkraft entweder auf den Außenring oder auf den Innenring des Wälzlagers wirken. Der Innenring kann beispielsweise auf ein fest mit einem in dem Druckkolben beweglichen Kolben verbunden sein.

Ferner wird vorgeschlagen, dass das Wälzlager schräge Laufbahnen aufweist, d.h. dass das Wälzlager als Schräglager, beispielsweise als Schrägkugellager oder Schrägwalzenlager ausgebildet ist. Ein Wälzlager hat eine schräge Laufbahn im dem oben genannten Sinne, wenn eine senkrecht zur Längsrichtung der Laufbahn gerichtete Tangente an eine Scheitellinie der Laufbahn gegenüber der Rotationsachse des Wälzlagers geneigt ist. Die Laufbahn kann beispielsweise ein logarithmisches Profil haben. Durch die Ausbildung des Wälzlagers als Schräglager kann eine starke Abhängigkeit der durch einen Schlupf der Wälzkörper entstehenden Lagerreibung von der auf das Wälzlager wirkenden Axialkraft gewährleistet werden. Durch die Lagerreibung wird ein Drehmoment vom antriebsseitigen Ring des Lagers auf einen abtriebsseitigen Ring des Lagers übertragen, was schließlich in einer Drehmomentübertragung über das Wälzlager resultiert. Durch die Ausbildung des Wälzlagers als Schräglager kann eine eindeutige Abhängigkeit des übertragenen Drehmoments von der Axialkraft erreicht werden.

Eine besonders verschleißarme Drehmomentübertragungsvorrichtung kann erreicht werden, wenn das Wälzlager als Toroidallager ausgebildet ist, d. h. wenn die Laufflächen und/oder die Wälzkörper ein Profil haben, das einem Oberflächenausschnitt eins Toröids entspricht.

Ferner wird vorgeschlagen, dass die Drehmomentübertragungsvorrichtung einen Drucksensor zum Messen des Drucks in der Druckkammer umfasst. Dadurch kann der von der Steuereinheit angesteuerte Druck überwacht werden und über einen in der Steuereinheit integrierten bzw. implementierten Regelkreis in einer sicheren Weise auf einen Sollwert geregelt werden.

Wenn eine der Wellen als Hohlwelle ausgebildet ist und die andere Welle in einem Innenraum aufnimmt, ist eine kompakte, Bauraum sparende Bauweise möglich. Dabei sind einerseits Ausgestaltungen der Erfindung denkbar, in denen die erste, angetriebene Welle als Hohlwelle ausgebildet ist und die zweite Welle in Innenraum der Hohlwelle angeordnet ist und andererseits wären Ausgestaltungen der Erfindung mit einer umgekehrten Anordnung denkbar.

Ferner wird vorgeschlagen, die Drehmomentübertragungsvorrichtung mit einer Lagervorrichtung zum axial festen Lagern der als Hohlwelle ausgebildeten Welle in einem Gehäuse auszustatten. Durch die axiale Festlegung der Hohlwelle kann die auf das Wälzlager wirkende Axialkraft in einer konstruktiv einfachen Weise über die im Innenraum der Hohlwelle angeordnete Welle ausgeübt werden.

Wenn der Druck in der Druckkammer auf eine axiale Stirnseite der in dem Innenraum der Hohlwelle angeordneten Welle wirkt, ist eine ungezwungene Kraftübertragung von der Druckkammer auf das Wälzlager erreichbar.

Durch ein zweites Wälzlager zum radialen Lagern der Hohlwelle auf der in ihrem Innenraum aufgenommenen Welle kann ein Radialspiel bei geringer Axialkraft auf das erste, zur Drehmomentübertragung ausgelegte Wälzlager vermieden werden und ein Verkippen der beiden Wellen kann vermieden werden, so dass die Rotationsachsen der beiden Wellen stets kolinear bleiben. Das zweite Wälzlager kann in einer vorteilhaften und robusten Ausgestaltung der Erfindung als Zylinderrollenlager ausgebildet sein.

In einem Verbrennungsmotor mit einer Abgasturbine und einer Drehmomentübertragungsvorrichtung der oben beschriebenen Art kommen die Vorteile der Erfindung besonders zum Tragen, wobei in diesem Fall die Abgasturbine die erste Welle der Drehmomentübertragungseinrichtung antreibt. Da die erfindungsgemäße Drehmomentübertragungsvorrichtung flexibel in einem breiten Bereich von Betriebssituationen einsetzbar ist, kann die thermische Energie im Abgas effektiv ausgenutzt werden, und zwar insbesondere auch dann, wenn der Verbrennungsmotor in einem breiten Bereich von Drehzahlen mit den verschiedensten Lasten betrieben wird. Dadurch kann die erfindungsgemäße Drehmomentübertragungsvorrichtung überraschenderweise mit großem Gewinn in Verbrennungsmotoren für Lastkraftwagen eingesetzt werden, wodurch Kraftstoffeinsparungen, verbesserte Emissionswerte und ein höheres Drehmoment bei gleich bleibender Motorgröße erreicht werden können.

Der letztgenannte Vorteil des höheren Drehmoments bei gleich bleibender Motorgröße kann insbesondere dann erreicht werden, wenn zweite Welle der Drehmomentübertragungseinrichtung eine Kurbelwelle des Verbrennungsmotors ist oder zumindest über ein Getriebe mit der Kurbelwelle verbunden ist.

Ein Verfahren zum Übertragen eines Antriebsmoments von einer ersten Welle auf eine zweite Welle, die über ein Wälzlager koaxialen gelagert sind, wird nun beschrieben.

Es wird vorgeschlagen, dass zum Einstellen der Drehmomentübertragung eine axiale Last des Wälzlagers variiert wird. Wie bereits im Zusammenhang mit der erfindungsgemäßen Drehmomentübertragungsvorrichtung erläutert, kann durch die Verwendung eines Wälzlagers zur Drehmomentübertragung im Vergleich zu der nahe liegenden Lösung, die in der Verwendung einer hydraulischen bzw. hydrodynamischen Drehmomentübertragungsvorrichtung besteht, ein sehr geringer Ölverbrauch erzielt werden. Da hydraulische bzw. hydrodynamische Drehmomentwandler sehr empfindlich gegenüber Verschmutzungen im Öl sind, kann zudem die Robustheit verbessert werden und die Lebensdauer kann verlängert werden. Letztlich sind dadurch Kosteneinsparungspotenziale realisierbar.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Figur 1: eine schematische Darstellung einer Drehmomentübertragungsvorrichtung zum Übertragen eines Antriebsmoments von einer ersten Welle auf eine zweite Welle,
- Figur 2: die Drehmomentübertragungsvorrichtung aus Figur 1 mit einer Steuereinheit und einer Druckerzeugungsanordnung und
- Figur 3: die Drehmomentübertragungsvorrichtung aus den Figuren 1 und 2 in einer Schnittdarstellung.

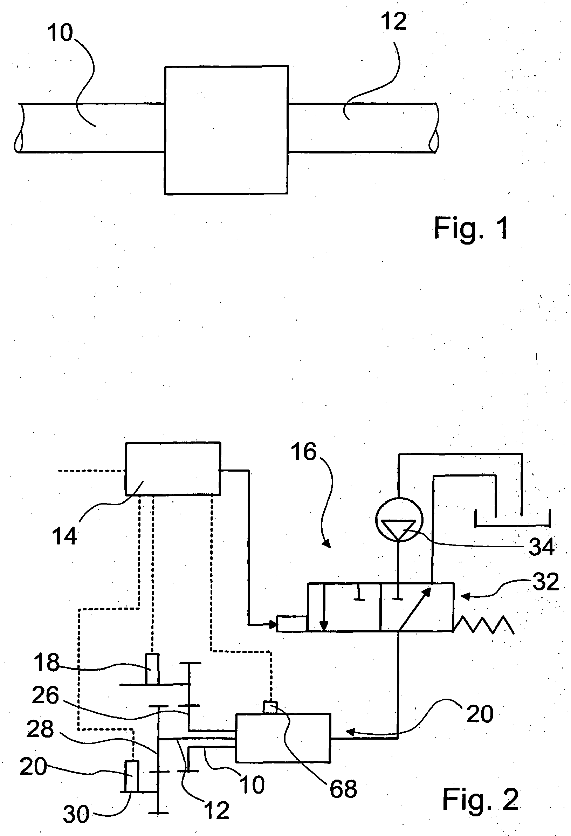

Figur 1 zeigt eine Drehmomentübertragungsvorrichtung bzw. Kupplung zum Übertragen eines Antriebsmoments von einer ersten Welle 10 auf eine zweite Welle 12. Die Drehmomentübertragungseinrichtung erlaubt die Kopplung der beiden Wellen 10, 12 auch dann, wenn die Drehzahlen der beiden Wellen 10, 12 unterschiedlichen Drehschwingungen bzw. periodischen Drehzahlschwankungen unterliegen.

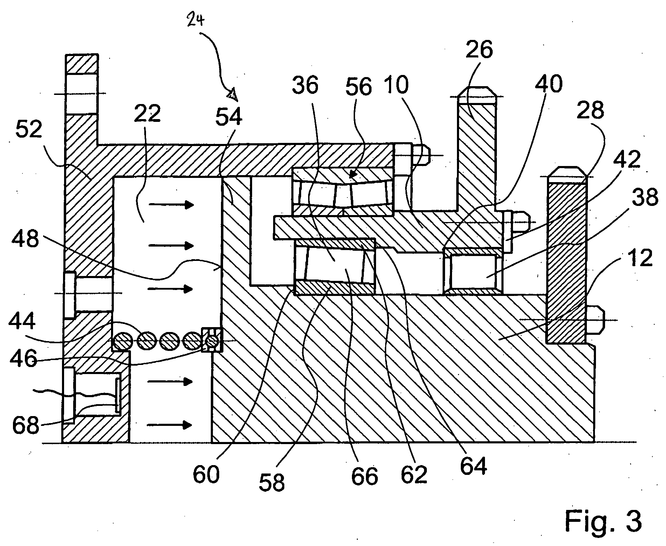

Figur 2 zeigt die Drehmomentübertragungsvorrichtung aus Figur 1 mit einer Steuereinheit 14 und einer Druckerzeugungsanordnung 16. Die Drehmomentübertragungsvorrichtung umfasst zwei Drehzahlsensoren 18, 20, deren Signale jeweils über eine Signalleitung von der Steuereinheit 14 ausgelesen werden können. Die Steuereinheit 14 ist durch eine entsprechende Software, die die Signale der Drehzahlsensoren 18, 20 ausliest und verarbeitet, dazu ausgelegt, die Signale der beiden Drehzahlsensoren 18, 20 zum Messen einer Drehzahl der ersten Welle 10 und der Drehzahl der zweiten Welle 12 auszuwerten. Dazu ist in einer hier nicht dargestellten Speichereinheit der Steuereinheit 14 eine Kennlinie bzw. ein Kennfeld gespeichert, welches bei vorgegebenem Druck in einer in Figur 3 dargestellten Druckkammer 22 eines Stellmittels 24 zum Einstellen einer Drehmomentübertragung von der ersten Welle 10 auf die zweite Welle 12 herrschendem Druck und abhängig von den Drehzahlen und/oder der Drehzahldifferenz das übertragene Drehmoment angibt.

Die Drehmomentübernagungseinheit ist Teil eines Verbrennungsmotors eines Lastkraftwagens und die erste Welle 10 ist über ein Zahnrad 26 mit einer hier nicht dargestellten Abgasturbine in einem Abgastrakt des Verbrennungsmotors verbunden. Die zweite Welle 12 ist über ein weiteres Zahnrad 28 mit einer Kurbelwelle 30 des Verbrennungsmotors verbunden. Die durch das erste Zahnrad 26 und das zweite Zahnrad 28 vermittelten Übersetzungen sind derart gewählt, dass auch bei maximaler Drehzahl des Verbrennungsmotors bzw. der Kurbelwelle 30 die Drehzahl der ersten Welle 10 höher ist als die Drehzahl der zweiten Welle 12.

Die Steuereinheit 14 ist Teil einer Motorsteuerung des Verbrennungsmotors und bestimmt den Druck in der Druckkammer 22 abhängig von den Drehzahlen der ersten Welle 10 und der zweiten Welle 12 und abhängig vom Lastmoment des Verbrennungsmotors und von anderen Motorkenngrößen wie der Luftmenge, der eingespritzten Kraftstoffmenge, verschiedenen Temperaturen etc., die über einen CAN-Bus verfügbar sind.

Die Druckkammer 22 ist mit Hydrauliköl gefüllt, das über ein elektromagnetisches Regelventil 32 von einer Pumpe 34 eingespeist wird. Die Steuereinheit 14 steuert einen Aktor des Regelventils 32 über eine Steuerleitung.

Figur 3 zeigt die Drehmomentübertragungsvorrichtung aus den Figuren 1 und 2 in einer Schnittdarstellung. Die Drehmomentübertragungsvorrichtung umfasst zwei Wälzlager 36, 38 zum koaxialen Lagern der ersten Welle 10 gegenüber der zweiten Welle 12 und das Stellmittel 24 zum Einstellen einer Drehmomentübertragung von der ersten Welle 10 auf die zweite Welle 12. Dabei ist ein erstes Wälzlager 36 zur Drehmomentübertragung zwischen der ersten und der zweiten Welle 12 ausgelegt und ein zweites Wälzlager 38 dient zur radialen Lagerung der ersten Welle 10 auf der zweiten Welle 12 vorgesehen. Das zweite Wälzlager 38 ist als Radial - Zylinderrollenlager ausgebildet und mit dem Innenring axial beweglich auf die zweite Welle 12 aufgesteckt, während der Außenring des zweiten Wälzlagers 38 über einen Bund 40 und ein Halteelement 42 axial und radial fest in dem Hohlraum der aus Hohlwelle ausgebildeten zweiten Welle 12 aufgenommen ist.

Erfindungsgemäß ist das Stellmittel 24 als ein Mittel zum Variieren einer axialen Last des ersten Wälzlagers 36 ausgebildet. Das Stellmittel 24 umfasst insbesondere die Druckkammer 22, die Druckerzeugungsanordnung 16 mit der Pumpe 34 und dem Regelventil 32 und eine in der Druckkammer 22 angeordnete Feder 44, die sich einerseits an einem Gehäuse 52 der Drehmomentübertragungsvorrichtung abstützt und andererseits über ein Axialkugellager 46 an einer Stirnseite 48 der zweiten Welle 12 anliegt. Die Stirnseite 48 der zweiten Welle 12 bildet eine verschiebbare Wand der Druckkammer 22 und die zweite Welle 12 selbst ist axial verschiebbar in einer Bohrung des Gehäuses 52 gelagert, deren Wände die übrigen Wände der Druckkammer 22 bilden. Dadurch wirkt die zweite Welle 12 als axial verschiebbarer Kolben bzw. Druckkolben 54 in der Druckkammer 22.

Die erste Welle 10 ist als Hohlwelle ausgebildet und nimmt die zweite Welle 12 in einem Innenraum auf. Außerdem weist die Drehmomentübertragungsvorrichtung eine aus zwei schrägen Toroidal - Rollenlagern mit entgegen gesetzter Schräge zusammengesetzte Lagervorrichtung 56 zum axial und radial festen Lagern der als Hohlwelle ausgebildeten ersten Welle 10 in dem Gehäuse 52 auf.

Der Innenring 58 des ersten Wälzlagers 36 liegt an einer Stufe 60 im Profil der zweiten Welle 12 an, so dass die auf die Stirnseite 48 der zweiten Welle 12 in der axialen Richtung wirkende Druckkraft über die Stufe 60 am Innenring 58 abgestützt wird. Das Stellmittel 24 umfasst demnach einen auf den Innenring 58 des Wälzlagers 36 wirkenden Druckkolben 54.

Der Außenring 62 des ersten Wälzlagers 36 ist andererseits in der Richtung, in welcher der Druck in der Druckkammer 22 wirkt, an einer weiteren Stufe 64 im Innenprofil der als Hohlwelle ausgebildeten ersten Welle 10 abgestützt, so dass die über die Wälzkörper 66 des ersten Wälzlagers 36 vom Innenring 58 auf den Außenring 62 übertragenen Druckkräfte über die weitere Stufe 64 an der ersten Welle 10 abgestützt werden.

Das Wälzlager 36 ist in dem in Figur 3 dargestellten Ausführungsbeispiel als Toroidallager schrägen Laufbahnen ausgebildet, so dass ein Durchmesser der leicht gewölbten, kegelartigen Laufbahnen sich in der Richtung der gemeinsamen Rotationsachse der beiden Wellen 10, 12 verjüngt. Die auf den Innenring 58 ausgeübte axiale Kraft, die über die Wälzkörper 66 übertragen wird erzeugt wegen der Neigung der Laufbahnen in der axialen Richtung daher eine starke radiale Kraftkomponente, mit welcher die Wälzkörper 66 fest an die Laufbahnen angepresst werden.

Ferner laufen die Wälzkörper 66 aufgrund des in der axialen Richtung sich verringernden Durchmessers der Laufbahnen und der walzenartigen, beinahe zylindrischen Form der Wälzkörper 66 mit einem Schlupf auf den Laufbahnen des Innenrings 58 und des Außenrings 62. Je größer die Kraft ist, mit welcher die Wälzkörper 66 auf die Laufbahnen gepresst werden, desto größer ist das durch den Schlupf erzeugten Reibmoment. Daher kann durch eine geeignete Wahl des Drucks in der Druckkammer 22 das Reibmoment des ersten Wälzlagers 36 und damit das über das Wälzlager 36 von der ersten Welle 10 auf die zweite Welle 12 übertragene Drehmoment eingestellt werden.

Ferner umfasst die Drehmomentüberiragungsvorrichtung einen Drucksensor 68 zum Messen des Drucks in der Druckkammer 22. Die Steuereinheit 14 erfasst den Druck in der Druckkammer 22 und vergleicht ihn mit einem Sollwert. Ausgehend von der Differenz zwischen dem erfassten Druck und dem Sollwert des Drucks in der Druckkammer 22 regelt die Steuereinheit 14 den Druck auf den Sollwert.

Die in den Figuren 1 - 3 dargestellte Drehmomentübertragungsvorrichtung ist Teil eines Verbrennungsmotors mit einer Abgasturbine, wobei die Abgasturbine über ihre Turbinenwelle die erste Welle 10 der Drehmomentübertragungseinrichtung antreibt und wobei die zweite Welle 12 über das Zahnrad 28 mit einer Kurbelwelle 30 des Verbrennungsmotors in Verbindung steht und das Drehmoment auf diese überträgt (Figur 2).

Die oben beschriebene Drehmomentübertragungsvorrichtung realisiert ein Verfahren zum Übertragen eines Antriebsmoments von einer ersten Welle 10 auf eine zweite Welle 12, die über ein Wälzlager 36 koaxial gelagert sind. Nach dem Verfahren wird zum Einstellen der Drehmomentübertragung eine axiale Last des Wälzlagers 36 variiert.

Der Erfindungsgedanke ist nicht auf das oben beschriebene Ausführungsbeispiel beschränkt. Statt des Toroidallagers könnten beispielsweise auch ein oder zwei Schrägkugellager oder Schrägrollen- bzw. Kegellager verwendet werden.

### Bezugszeichenliste

- 10: Welle
- 12: Welle
- 14: Steuereinheit
- 16: Druckerzeugungsanordnung
- 18: Drehzahlsensor

- 20: Drehzahlsensor
- 22: Druckkammer
- 24: Stellmittel
- 26: Zahnrad
- 28: Zahnrad

- 30: Kurbelwelle
- 32: Regelventil
- 34: Pumpe
- 36: Wälzlager
- 38: Wälzlager

- 40: Bund
- 42: Halteelement
- 44: Feder
- 46: Axialkugellager
- 48: Stirnseite
- 52: Gehäuse
- 54: Druckkolben
- 56: Lagervorrichtung
- 58: Innenring

- 60: Stufe
- 62: Außenring

## Patentansprüche

1. Drehmomentübertragungsvorrichtung zum Übertragen eines Antriebsmoments von einer ersten Welle (10) auf eine zweite Welle (12), umfassend wenigstens ein Wälzlager (36) zum koaxialen Lagern der ersten Welle (10) gegenüber der zweiten Welle (12) und ein Stellmittel (24) zum Einstellen einer Drehmomentübertragung von der ersten Welle (10) auf die zweite Welle (12), wobei das Stellmittel (24) als ein Mittel zum Variieren einer axialen Last des Wälzlagers (36) ausgebildet ist, **dadurch gekennzeichnet, dass** eine Steuereinheit (14) vorgesehen ist, die dazu ausgelegt ist, die Signale von wenigstens einem Drehzahlsensor (18, 20) zum Messen einer Drehzahl einer der Wellen (10, 12) auszuwerten und das Stellmittel (24) abhängig von der Drehzahl zu betätigen.

2. Drehmomentübertragungsvorrichtung nach Anspruch 1, **dadurch gekennzeichnet, dass** das Stellmittel (24) wenigstens einen auf einen Ring des Wälzlagers (36) wirkenden Druckkolben (54) in einer Druckkammer (22) umfasst.

3. Drehmomentübertragungsvorrichtung nach einem der vorhergehenden Ansprüche, **dadurch gekennzeichnet, dass** das Wälzlager (36) schräge Laufbahnen aufweist.

4. Drehmomentübertragungsvorrichtung nach einem der vorhergehenden Ansprüche, **dadurch gekennzeichnet, dass** Wälzlager (36) als Toroidallager ausgebildet ist.

5. Drehmomentübertragungsvorrichtung nach einem der vorhergehenden Ansprüche, **dadurch gekennzeichnet, dass** die Steuereinheit (14) dazu ausgelegt ist, die Signale von wenigstens zwei Drehzahlsensoren (18, 20) zum Messen einer Drehzahl der ersten Welle (10) und der Drehzahl der zweiten Welle (12) auszuwerten.

6. Drehmomentübertragungsvorrichtung nach einem der vorhergehenden Ansprüche, **gekennzeichnet durch** einen Drucksensor (68) zum Messen des Drucks in einer Druckkammer (22) zum Erzeugen einer auf das Wälzlager (36) wirkenden Druckkraft.

7. Drehmomentübertragungsvorrichtung nach einem der vorhergehenden Ansprüche, **dadurch gekennzeichnet, dass** eine der Wellen (10) als Hohlwelle ausgebildet ist und die andere Welle (12) in einem Innenraum aufnimmt.

8. Drehmomentübertragungsvorrichtung nach Anspruch 7, **gekennzeichnet durch** eine Lagervorrichtung (56) zum axial festen Lagern der als Hohlwelle ausgebildeten Welle in einem Gehäuse (52).

9. Drehmomentübertragungsvorrichtung nach Anspruch 2 und Anspruch 7 oder 8, **dadurch gekennzeichnet, dass** der Druck in der Druckkammer (22) auf eine axiale Stirnseite (48) der in dem Innenraum der Hohlwelle angeordneten Welle (10) wirkt.

10. Drehmomentübertragungseinrichtung nach einem der Ansprüche 7 - 9, **gekennzeichnet durch** ein zweites Wälzlager (36) zum radialen Lagern der Hohlwelle (10) auf der in ihrem Innenraum aufgenommenen Welle (12).

11. Verbrennungsmotor mit einer Abgasturbine und einer Drehmomentübertragungseinrichtung nach einem der vorhergehenden Ansprüche, wobei die Abgasturbine die erste Welle (10) der Drehmomentübertragungseinrichtung antreibt.

12. Verbrennungsmotor nach Anspruch 11, **dadurch gekennzeichnet, dass** die zweite Welle (12) der Drehmomentübertragungseinrichtung zumindest mit einer Kurbelwelle (30) des Verbrennungsmotors verbunden ist.

## Claims

1. Torque-transmitting device for transmitting a drive torque from a first shaft (10) to a second shaft (12), comprising at least one rolling bearing (36) for the coaxial mounting of the first shaft (10) relative to the second shaft (12), and comprising an adjustment means (24) for adjusting a transmission of torque from the first shaft (10) to the second shaft (12), wherein the adjustment means (24) is in the form of a means for varying an axial load of the rolling bearing (36), **characterized in that** a control unit (14) is provided which is designed to evaluate the signals from at least one rotational speed sensor (18, 20) for measuring a rotational speed of one of the shafts (10, 12) and to actuate the adjustment means (24) in a manner dependent on the rotational speed.

2. Torque-transmitting device according to Claim 1, **characterized in that** the adjustment means (24) comprises at least one pressure piston (54), which acts on a ring of the rolling bearing (36), in a pressure chamber (22).

3. Torque-transmitting device according to one of the preceding claims, **characterized in that** the rolling bearing (36) has inclined raceways.

4. Torque-transmitting device according to one of the preceding claims, **characterized in that** rolling bearing (36) is in the form of a toroidal bearing.

5. Torque-transmitting device according to one of the preceding claims, **characterized in that** the control unit (14) is designed to evaluate the signals from at least two rotational speed sensors (18, 20) for measuring a rotational speed of the first shaft (10) and the rotational speed of the second shaft (12).

6. Torque-transmitting device according to one of the preceding claims, **characterized by** a pressure sensor (68) for measuring the pressure in a pressure chamber (22) for generating a pressure force which acts on the rolling bearing (36).

7. Torque-transmitting device according to one of the preceding claims, **characterized in that** one of the shafts (10) is in the form of a hollow shaft and receives the other shaft (12) in an interior space.

8. Torque-transmitting device according to Claim 7, **characterized by** a bearing device (56) for the axial fixed mounting of the shaft, which is in the form of a hollow shaft, in a housing (52).

9. Torque-transmitting device according to Claim 2 and Claim 7 or 8, **characterized in that** the pressure in the pressure chamber (22) acts on an axial face side (48) of the shaft (10) that is arranged in the interior space of the hollow shaft.

10. Torque-transmitting device according to one of Claims 7-9, **characterized by** a second rolling bearing (36) for the radial mounting of the hollow shaft (10) on the shaft (12) that is received in the interior space of said hollow shaft.

11. Internal combustion engine having an exhaust-gas turbine and having a torque-transmitting device according to one of the preceding claims, wherein the exhaust-gas turbine drives the first shaft (10) of the torque-transmitting device.

12. Internal combustion engine according to Claim 11, **characterized in that** the second shaft (12) of the torque-transmitting device is connected at least to a crankshaft (30) of the internal combustion engine.

## Revendications

1. Dispositif de transmission de couple pour transférer un couple d'entraînement d'un premier arbre (10) à un deuxième arbre (12), comprenant au moins un palier à roulement (36) pour le support coaxial du premier arbre (10) par rapport au deuxième arbre (12) et un moyen de réglage (24) pour ajuster un transfert de couple du premier arbre (10) au deuxième arbre (12), le moyen de réglage (24) étant réalisé sous forme de moyen destiné à faire varier une charge axiale du palier à roulement (36),
**caractérisé en ce qu'**une unité de commande (14) est prévue, laquelle est conçue de manière à analyser les signaux provenant d'au moins un capteur de vitesse de rotation (18, 20) pour mesurer une vitesse de rotation de l'un des arbres (10, 12) et pour actionner le moyen de réglage (24) en fonction de la vitesse de rotation.

2. Dispositif de transmission de couple selon la revendication 1, **caractérisé en ce que** le moyen de réglage (24) comprend au moins un piston de pression (54) agissant sur une bague du palier à roulement (36) dans une chambre de pression (22).

3. Dispositif de transmission de couple selon l'une quelconque des revendications précédentes, **caractérisé en ce que** le palier à roulement (36) présente des pistes de roulement obliques.

4. Dispositif de transmission de couple selon l'une quelconque des revendications précédentes, **caractérisé en ce que** le palier à roulement (36) est réalisé sous forme de palier toroïdal.

5. Dispositif de transmission de couple selon l'une quelconque des revendications précédentes, **caractérisé en ce que** l'unité de commande (14) est conçue de manière à analyser les signaux provenant d'au moins deux capteurs de vitesse de rotation (18, 20) pour mesurer une vitesse de rotation du premier arbre (10) et la vitesse de rotation du deuxième arbre (12).

6. Dispositif de transmission de couple selon l'une quelconque des revendications précédentes, **caractérisé par** un capteur de pression (68) pour mesurer la pression dans une chambre de pression (22) pour générer une force de pression agissant sur le palier à roulement (36).

7. Dispositif de transmission de couple selon l'une quelconque des revendications précédentes, **caractérisé en ce que** l'un des arbres (10) est réalisé sous forme d'arbre creux et reçoit l'autre arbre (12) dans un espace interne.

8. Dispositif de transmission de couple selon la revendication 7, **caractérisé par** un dispositif de palier (56) pour le support fixe axialement de l'arbre réalisé sous forme d'arbre creux dans un boîtier (52).

9. Dispositif de transmission de couple selon la revendication 2 et la revendication 7 ou 8, **caractérisé en ce que** la pression dans la chambre de pression (22) agit sur un côté frontal axial (48) de l'arbre (10) disposé dans l'espace interne de l'arbre creux.

10. Dispositif de transmission de couple selon l'une quelconque des revendications 7 à 9, **caractérisé par** un deuxième palier à roulement (36) pour le support radial de l'arbre creux (10) sur l'arbre (12) reçu dans son espace interne.

11. Moteur à combustion interne comprenant une turbine à gaz d'échappement et un dispositif de transmission de couple selon l'une quelconque des revendications précédentes, la turbine à gaz d'échappement entraînant le premier arbre (10) du dispositif de transmission de couple.

12. Moteur à combustion interne selon la revendication 11, **caractérisé en ce que** le deuxième arbre (12) du dispositif de transmission de couple est connecté au moins à un vilebrequin (30) du moteur à combustion interne.
